# EUROPEAN PATENT SPECIFICATION

(11) **EP 0 885 765 B1**
(45) Date of publication and mention of the grant of the patent: **17.04.2002**
(21) Application number: 98201985.3
(22) Date of filing: 15.06.1998
(51) Int. Cl.: B60K 17/02, F16D 43/18, F16D 13/72

(54) **Self-ventilating clutch**
Eigenbelüftete Kupplung
Embrayage à autoventilation

(30) Priority: 17.06.1997 IT MI971418
(43) Date of publication of application: 23.12.1998
(73) Proprietor: PIAGGIO & C. S.p.A., 56025 Pontedera (Pisa) (IT)
(72) Inventor: Moroni, Renato, 56031 Bientina (Pisa) (IT)
(74) Representative: Zanardo, Giovanni

(56) References cited:
- WO-A-95/13486
- FR-A- 1 113 195
- GB-A- 534 220
- US-A- 4 531 928
- PATENT ABSTRACTS OF JAPAN vol. 008, no. 100 (M-295), 11 May 1984 (1984-05-11) & JP 59 013129 A (YAMAHA HATSUDOKI KK), 23 January 1984 (1984-01-23)

## Description

This invention relates to a self-ventilating clutch.

In the current state of the art, inter alia, centrifugal clutches are available used, for example, for stepless transmissions with two expandable pulleys and the relative drive belt.

On increasing the engine r.p.m., the operation of such a centrifugal clutch in a vehicle on which said stepless transmission is mounted highlights both the structure of such a clutch and the technical problems related to it.

In this respect, it can be noted that with the engine idling, the drive belt is at minimum ratio (low gear) and the driven pulley rotates to entrain the plate to which the weights are fixed. As the r.p.m. is very low, these weights are in their rest position (weights closed) lying towards the centre, and do not touch the interior of the cap, which is hence absolutely still. In this situation the clutch is clearly open and the vehicle provided with the clutch is at rest.

When the engine accelerates, the driven pulley with its clutch unit increases its r.p.m.. As the clutch r.p.m. increases, the centrifugal force overcomes the resistance of the weight return springs, with the result that the weights open to graze the clutch drum which is still at rest.

This is the moment when entrainment commences. As already stated, the transmitted torque is zero, but the clutch cap begins to be contacted by the friction linings, although with zero pressure.

On further increasing the petrol feed, the engine accelerates and with it the driven pulley and the clutch. The centrifugal force increases and the weights now receive a decided force which brings them into contact with the cap, to generate friction forces tending to rotate the cap.

It will now be assumed that the engine is run full-out. The engine accelerates further so that the driven pulley and the clutch reach a higher r.p.m. The centrifugal force further increases and the weights apply maximum contact force to the linings which tend to entrain the cap.

At this point the drive part of the clutch rotates the clutch cap to which the wheel is connected via suitable reduction gears, to accelerate it until the instantaneous speed of the weight-carrier plate is exactly equal to that of the cap and synchronization is achieved. The duration of this stage depends on the inertia to be accelerated (rotating parts and vehicle mass).

The clutch has now performed its task, in that the engine is rigidly connected to the wheel. The transmission will perform its task by varying the transmission ratio on the basis of the petrol feed, the road inclination and the speed.

All the stages have been described, for convenience and clarity, by assuming that the petrol feed is increased slowly. In reality, these stages take place in the stated manner except with regard to the speed with which the throttle is opened. Hence what is different in practice is the rate at which the engine r.p.m. increases, with consequent different vehicle performance.

In such a traditional centrifugal clutch, its limits are immediately evident from its operation.

It is immediately noticed that, given the more or less violent and continuous interaction between the parts, problems arise relative to the life and correct operability of the entire clutch. This situation is further aggravated by the fact that, precisely because of the already described type of operation and structure, the parts become overheated, and their life and operability become strongly compromised with time.

Inter alia, because of the extremely compact structure of a clutch of this type, there is little space available for modifications or for adding parts which could eliminate the stated problem.

It is also known a self-ventilating clutch from US-A-4 531 928 which constitutes the preamble of claim 1.

JP 59 013 129 A shows a clutch which enables a forced cooling and in which the fans are carried by a weight carrier plate.

An object of the invention is to provide a clutch of centrifugal type which overcomes the stated technical problems and drawbacks, and is of simple construction.

A further object is to provide a clutch of the aforesaid type without having to disproportionately increase its overall dimensions, so enabling it to be installed on vehicles in which a traditional clutch is currently provided.

These objects are attained according to the present invention by providing a self-ventilating clutch according to claim 1.

Advantageously, a clutch according to the present invention achieves continuous cooling of the parts, with elimination of the problem of their overheating and consequent wear, so providing more secure and reliable clutch operation.

The characteristics and advantages of a self-ventilating clutch according to the present invention will be more apparent from the following description given by way of non-limiting example with reference to the accompanying drawings, in which:
Figure 1 is a sectional side elevation of a clutch according to the present invention in a low gear position with the two pulleys close together;
Figure 2 is a sectional side elevation of a clutch according to the present invention in a possible second high gear position with the two pulleys withdrawn from each other;

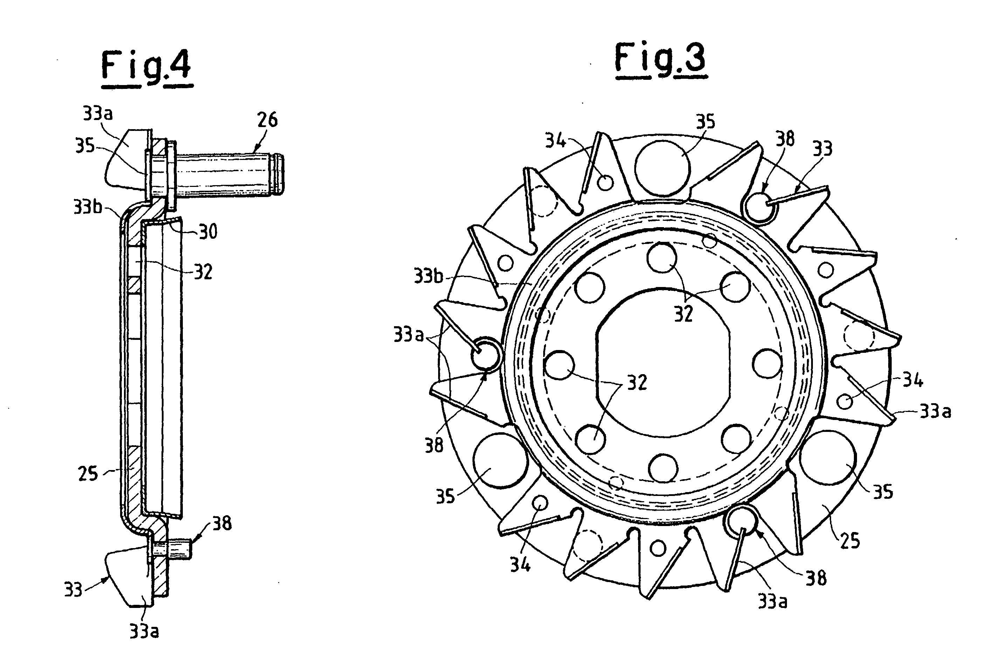

Figure 3 is a plan view from above of a weight carrier plate provided with a bladed fan for ventilating the clutch of Figure 1;
Figure 4 is a simplified sectional view of the plate of Figure 3;
Figure 5 is a plan view of that part of the clutch below the plate on which the weights expandable by centrifugal force are present; and
Figure 6 is a plan view of one of the weights on the opposite side to that shown in Figure 5.

The figures show a centrifugal clutch which, according to the present invention, is of self-ventilating type.

In this respect, as stated, a generic known centrifugal clutch has a large number of drawbacks relative to its life and operability, deriving from its overheating.

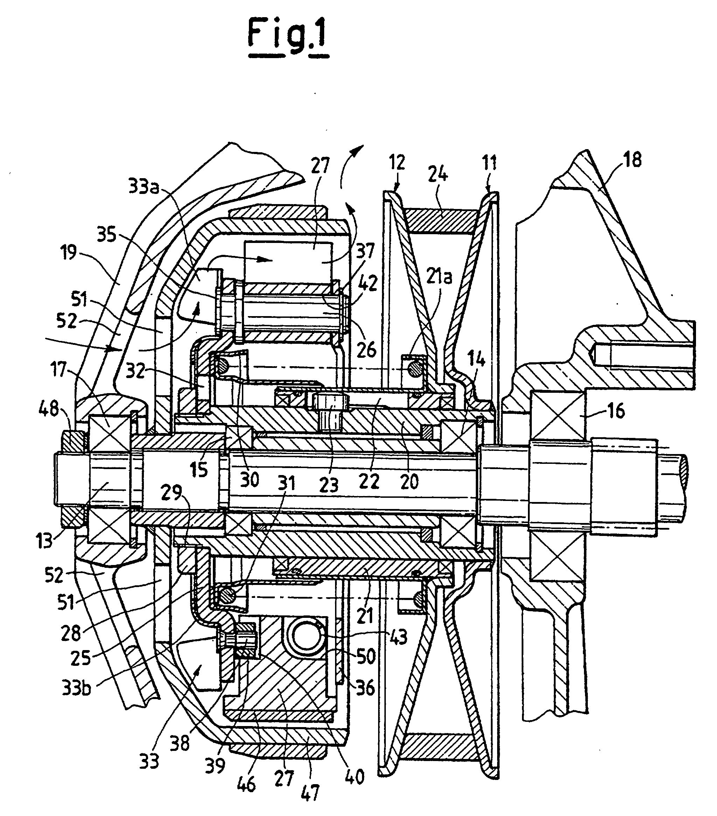

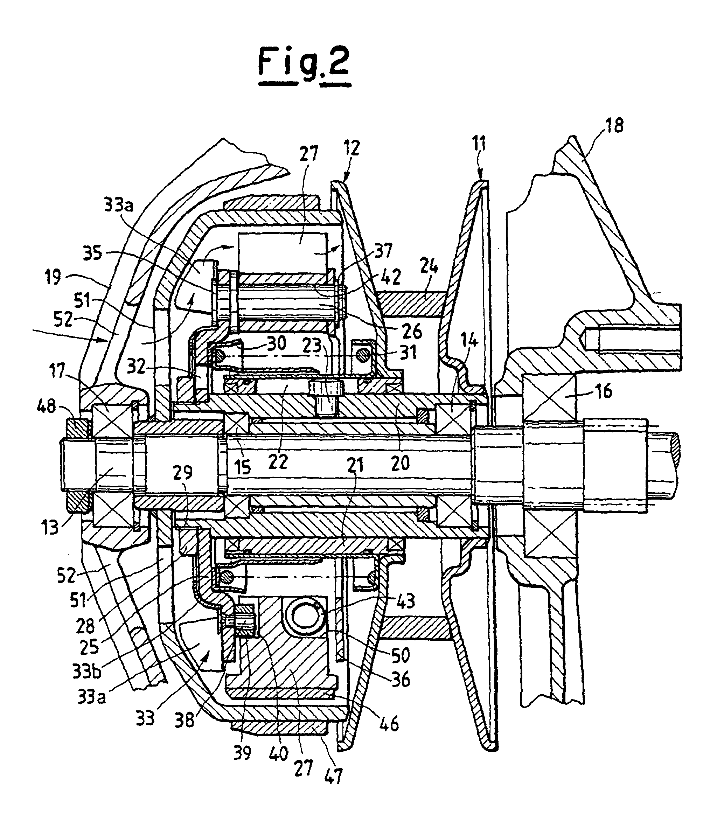

Figures 1 and 2 show a large part of the constituent elements of the structure of said clutch, in particular usable in a stepless transmission with expandable pulleys and relative drive belt.

An expandable driven pulley consisting of two plates or half-pulleys 11, 12 can be seen, forming part of the pulley transmission and rotatably arranged on an input shaft 13 to the final reduction gear, not shown, via two rolling-contact bearings 14 and 15.

The shaft 13 is supported at its two ends by two further rolling-contact bearings 16 and 17 housed respectively in crankcase parts 18 and 19 of the engine, not shown.

The half-pulley 11 is fixed and welded to the end of a bush 20, on which the movable half-pulley 12 slides and rotates. The half-pulley 12 has a cylindrical extension 21, coaxial to the shaft 13, which comprises profiled slots 22 in which pins 23, radially rigid with the bush 20, slidingly engage. These mechanical elements form the torque sensor enabling the axial load acting on a V-belt 24 to be varied on the basis of the torque transmitted by the engine.

To that end of the bush 20 distant from the fixed half-pulley 11 there is connected a weight carrier plate 25 carrying a certain number of pins 26 on which weights 27 rotate under the action of the centrifugal force.

The weight carrier plate 25 is maintained in a position rigid with the bush 20 by a ring nut 28 screwed onto a threaded end 29 of the bush 20. The weight carrier plate 25 is bent to define a seat for a curved housing 30 for containing a transmission counteracting spring 31 which gives a certain rigidity to the unit. At its opposite end the spring 31 is inserted into a further part of the housing formed by a further curved appendix 21a of the extension 21.

Lightening or entraining holes 32 are provided in the weight carrier plate 25. The purpose of the holes 32 is also to allow passage of air moved by a fan 33 with a multi-bladed flat body to improve heat transfer. The fan 33, for example formed of pressed sheet metal with blades 33a bent at 90° to a centrally holed base plate 33b, is fixed onto the weight carrier plate 25 on the opposite side to the weights 27, as shown in the figures, by a series of spot welds 34 used as the fixing element.

The pins 26 have a very wide head to give good support to the pin and are riveted at 35 to the weight carrier plate 25. At their opposite ends the pins 26 lock the weights 27 with the cooperation of a disc 36 held in position by snap rings 37.

On the weight carrier plate 25 there are fixed further pins 38, on which a rubber block 39 is secured for compression within a recess 40 in the weight 27. The profile of the recess 40 consists of two concentric circular arcs with their centre on the axis 41 in a through hole 42 in which the main pin 26 about which an individual weight 27 oscillates, is positioned.

The purpose of the rubber block 39 is to damp the micromovements of the weight 27 and to act as a limit stop for the rest position of the weights.

The weights 27 are each returned to their natural rest position towards the centre by a like number of springs 43 of preloaded torsion type. In the illustrated example, each spring 43 has a first end hooked into a first hole 44 provided in proximity to the hole 42, and its other end hooked into a second hole 45 provided in an intermediate region of the body of the weight 27. Each spring 43 is located between the hole 44 of one weight 27 and the hole 45 of the next or preceding weight 27.

These springs are provided in the same number as the weights, and can be arranged in various ways. For any weight 27 there is always a spring 43 tending to maintain the weight closed or to open it.

The overall effect of the springs is to return the weights into their rest configuration, but the relative arrangement depends strongly on the space requirements and dimensions of the clutch members. To avoid additional space requirements the springs 43 are housed in recesses 50 provided in the body of the weight 27.

The drive torque passes from the weights 27, via friction linings 46, to a clutch cap 47 which is fixed, for example by a splined bar coupling, onto the input shaft 13 to the final reduction gear.

Holes 51 are provided in the flat part of the cap to allow cooling air to pass towards the fan 33, and for weight reduction.

A nut 48 retains the entire system consisting essentially of the shaft 13, the bearings 17 and 16, the cap 47 and the driven pulley 11, 12.

Under slippage conditions, which is the typical case when driving uphill at low speed, the transmission is in low gear and the weight carrier plate 25 rotates at a higher speed than the cap 47, which is almost at rest. Under these conditions the fan 33 rotates and draws air through the apertures 52 provided in the support 19 and the apertures 51 provided in the cap 47, to hence feed the air onto the clutch weights 27 (see Figure 1).

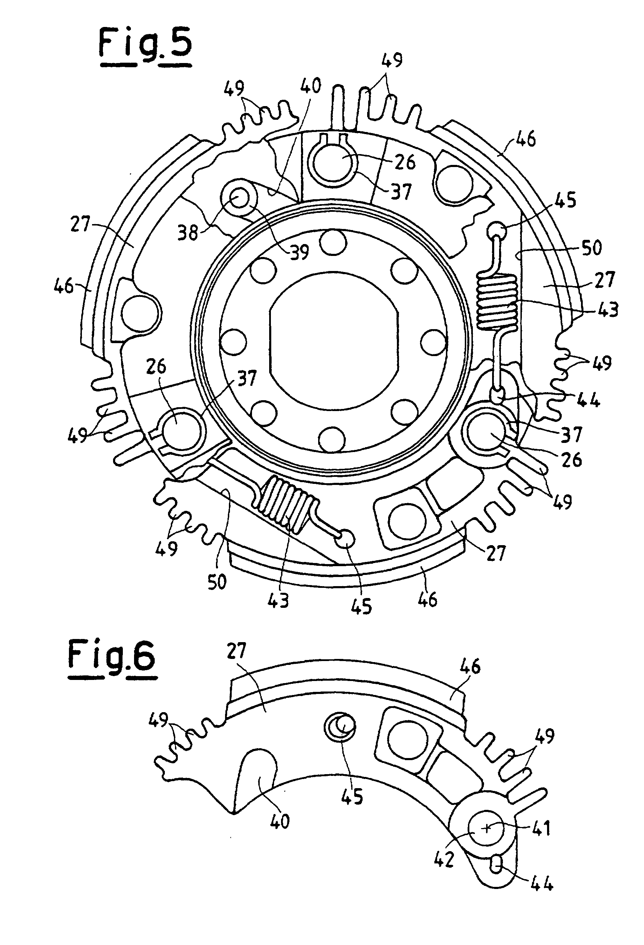

The weights 27 comprise fins 49 to increase the heat transfer surface and hence improve cooling (see Figures 5 and 6).

Under these conditions, ie with the transmission in low gear, the movable pulley 12 is in its furthest position from the clutch unit and cap 47, and consequently does not hinder the flow of the air fed onto the weights 27 by the fan 33.

In contrast, when the weights 27 and clutch cap 47 rotate at high speed, the clutch is closed and the transmission is in high gear (Figure 2). Under these conditions the rotation of the cap 47 reduces the air flow because the partitions between the passage apertures 51 reduce the entry cross-section. To this must be added the fact that, as the transmission is in high gear, the movable driven half-pulley 12 is very close to the clutch (Figure 2) to consequently hinder exit air passage. In this manner, and automatically, when ventilation is not necessary, the throughput of the fan 33 is practically zero, so eliminating undesirable power absorption.

The particular characteristic of this clutch is that of comprising on the weight carrier plate a fan formed by punching and bending, its purpose being to draw air through the holes 51 of the cap 47 and feed it onto the weights 27 lined at 46, so as to cool them during slippage and dissipate heat.

In addition to spot welds, the fixing elements 34 can comprise riveting, bolting, clamping between the ring nut 28 and weight carrier plate 25, etc. In brief, the two elements 33 and 25 need merely to be maintained rigidly joined together.

## Claims

1. A self-ventilating clutch in a vehicle comprising at least one drive wheel, in particular with a stepless transmission comprising expandable pulleys and the relative drive belt, associated with an expandable driven pulley (11, 12) rotatingly arranged on the input shaft (13) of a reduction gear supported on the engine crankcase (18, 19), said clutch comprising a clutch cap (47) rigid with the shaft (13) and arranged to be engaged by oscillating weights (27) expandable by centrifugal force, which carry friction linings (46) and are pivoted (at 42, 26) on a weight carrier plate (25) rigid with said expandable pulley (11, 12), wherein one component of said clutch carries fan elements (33, 33a, 33b) arranged to generate air circulation between the outside and the inside of said clutch,
**characterised in that** said fan elements (33) are in the form of a base plate (33b) with 90°-bent blades (33a), and are fixed to said weight carrier plate (25) on the opposite side to said weights (27) by mutual fixing elements (34).

2. A self-ventilating clutch as claimed in claim 1,
**characterised in that** said clutch cap (47) and said weight carrier plate (25) are provided with apertures (51, 52) for the passage of ventilation and cooling air.

3. A self-ventilating clutch as claimed in claim 1,
**characterised in that** elastic elements (43) are positioned between said weights (27) which oscillate on said weight carrier plate (25).

4. A self-ventilating clutch as claimed in claim 3,
**characterised in that** said elastic elements (43) are secured to holes (44, 45) in consecutively oscillating weights (27).

## Patentansprüche

1. Eigenbelüftete Kupplung in einem Fahrzeug, das mindestens ein Antriebsrad, insbesondere mit einem stufenlosen Getriebe umfasst, das ausfahrbare Riemenscheiben und den zugehörigen Antriebsriemen umfasst, denen eine ausfahrbare angetriebene Riemenscheibe (11, 12) zugeordnet ist, die an einer Antriebswelle (13) eines Untersetzungsgetriebes angeordnet ist, das an dem Motorkurbelgehäuse (18, 19) getragen ist, wobei die Kupplung einen mit der Welle (13) starren Kupplungsdeckel (47) umfasst, der derart eingerichtet ist, dass er mit oszillierenden Gewichten (27) in Eingriff stehen kann, die durch Fliehkraft ausgefahren werden und Reibbeläge (46) tragen und an einer mit der ausdehnbaren Riemenscheibe (11, 12) starren Gewichtsträgerplatte (25) (bei 42, 26) angelenkt sind, wobei ein Bauteil der Kupplung Lüfterelemente (33, 33a, 33b) trägt, die eingerichtet sind, um eine Luftzirkulation zwischen der Außenseite und der Innenseite der Kupplung zu erzeugen,
**dadurch gekennzeichnet,**
**dass** die Lüfterelemente (33) in der Form einer Grundplatte (33b) mit um 90° gebogenen Lamellen (33a) vorliegen und an der Gewichtsträgerplatte (25) auf der den Gewichten (27) abgewandten Seite durch Elemente zur wechselseitigen Befestigung (34) befestigt sind.

2. Eigenbelüftete Kupplung nach Anspruch 1,
**dadurch gekennzeichnet,**
**dass** der Kupplungsdeckel (47) und die Gewichtsträgerplatte (25) mit Öffnungen (51, 52) für den Hindurchtritt von Lüftungs- und Kühlungsluft versehen sind.

3. Eigenbelüftete Kupplung nach Anspruch 1,
**dadurch gekennzeichnet,**
**dass** die elastischen Elemente (43) zwischen den an der Gewichtsträgerplatte (25) oszillierenden Gewichten (27) angeordnet sind.

4. Eigenbelüftete Kupplung nach Anspruch 3,
**dadurch gekennzeichnet,**
**dass** die elastischen Elemente (43) an Löchern (44, 45) in aufeinander folgend oszillierenden Gewichten (27) befestigt sind.

## Revendications

1. Embrayage à auto-ventilation dans un véhicule comprenant, au moins, une roue motrice, en particulier avec une transmission sans démultiplication comportant des poulies extensibles et la courroie d'entraînement correspondante, associée à une poulie attaquée extensible (11, 12) disposée de façon à tourner sur l'arbre primaire (13) d'un rouage intermédiaire supporté sur le carter-moteur (18, 19), ledit embrayage comprenant un plateau de fermeture d'embrayage (47) solidaire de l'arbre (13) et agencé pour s'engager avec des volants (27) extensibles par l'intermédiaire d'une force centrifuge, lesquels portent des garnitures de friction (46) et pivotent (en 42, 26) sur une plaque de support de volant (25) solidaire de ladite poulie extensible (11, 12) dans lequel un composant dudit embrayage supporte des éléments de ventilation (33, 33a, 33b) disposés pour générer une circulation d'air entre l'extérieur et l'intérieur dudit embrayage, **caractérisé en ce que** lesdits éléments de ventilation (33) se présentent sous la forme d'une plaque de base (33b) comportant des lames repliées à 90° (33a), et **en ce qu'**ils sont fixés à ladite plaque de support de volant (25) du côté opposé auxdits volants (27) par des éléments de fixation mutuels (34).

2. Embrayage à auto-ventilation selon la revendication 1, **caractérisé en ce que** ladite plaque de fermeture d'embrayage (47) et ladite plaque de support de volant (25) sont pourvues d'ouvertures (51, 52) destinées au passage de l'air de ventilation et de refroidissement.

3. Embrayage à auto-ventilation selon la revendication 1, **caractérisé en ce que** des éléments élastiques (43) sont positionnés entre lesdits volants (27) qui oscillent sur ladite plaque de support de volant (25).

4. Embrayage à auto-ventilation selon la revendication 3, **caractérisé en ce que** lesdits éléments élastiques (43) sont fixés dans des trous (44, 45) formés dans des volants oscillant successivement (27).
